# EUROPEAN PATENT SPECIFICATION

(11) **EP 1 594 261 B1**
(45) Date of publication and mention of the grant of the patent: **12.12.2007**
(21) Application number: 05252547.4
(22) Date of filing: 22.04.2005
(51) Int. Cl.: H04L 12/28

(54) **Dynamic channel assignment in wireless local area networks**
Dynamische Kanalzuweisung in drahtlosen lokalen Netzwerken
Allocation dynamique de canal dans des réseaux locaux sans fil

(30) Priority: 06.05.2004 US 839177
(43) Date of publication of application: 09.11.2005
(73) Proprietor: Lucent Technologies Inc., Murray Hill, New Jersey 07974-0636 (US)
(72) Inventor: Leung, Kink K., Edison, NJ 08820 (US); Papadias, Constantinos B., Hoboken, NJ 07030 (US)
(74) Representative: Sarup, David Alexander

(56) References cited:
- WO-A-20/04073206
- US-A1- 2002 060 995
- US-B1- 6 404 756

## Description

### BACKGROUND OF THE INVENTION

### Field of the Invention

The present invention relates to channel assignments in 802.11 wireless networks.

### Description of the Related Art

IEEE 802.11 has emerged as the standard protocol for wireless Ethernet communication. While 802.11 is becoming widely used, it was not originally designed for such large scale use. Problems due to interference that may afflict large scale wireless communication networks were not given their due attention in the formation of the IEEE 802.11 standard.

802.11 is currently limited to static channel assignment (SCA). Under SCA, a channel used for data communication is fixed and data transfer between a first transceiver and a second transceiver occurs on only that channel regardless of channel utilization and interference. This can lead to a condition where a channel is overloaded while other channels are underutilized. An overloaded channel often experiences more interference than an underutilized channel. US Patent 6,404,756 to Whitehill et al. discloses a system that attempts to solve this problem through the use of a reservation channel. US Publication 2002/0060995 A1 by Cervello et al. discloses a system that selects new channels based on received signal strength (RSSI).

There are numerous detrimental consequences interference can have on a wireless communications network, such as increased packet error rate, reduced network throughput and longer transfer delays. Communication systems using the IEEE 802.11 standard with SCA can therefore have a channel suffering from reduced network throughput and longer transfer delays due to interference while other channels are underutilized.

### SUMMARY OF THE INVENTION

Methods according to the present invention are set out in the independent claims, to which the reader is now referred Preferred features are laid out in the dependent claims.

In one exemplary embodiment of the present invention, a first transceiver transmits a request-to-send message over a plurality of communication channels. A second transceiver receives the request-to-send messages, and chooses or selects one of the communication channels based on the received request-to-send messages. For example, in one embodiment, the channel over which the request-to-send message having the highest signal-to-noise ratio was received is selected. The second transceiver then sends a clear-to-send message over the selected channel. Based on receipt of this clear-to-send message, the first transceiver assigns the selected channel to transmit data packets.

As will be appreciated, this methodology of channel assignment adapts to conditions present in the communication system and may increase system throughput while reducing interference.

### BRIEF DESCRIPTION OF THE DRAWINGS

The present invention will become more fully understood from the detailed description given herein below and the accompanying drawings which are given by way of illustration only, wherein like reference numerals designate corresponding parts in the various drawings, and wherein:

Fig. 1 illustrates two transceivers employing an embodiment of a dynamic channel assignment (DCA) method according to the present invention;

Fig. 2 illustrates a signal flow diagram of an exemplary interaction between two transceivers according to an embodiment of the dynamic channel assignment (DCA) of the present invention; and

Fig. 3 is a simple block diagram illustrating a method of channel selection for receiving data using DCA according to an embodiment of the present invention.

### DETAILED DESCRIPTION OF THE INVENTION

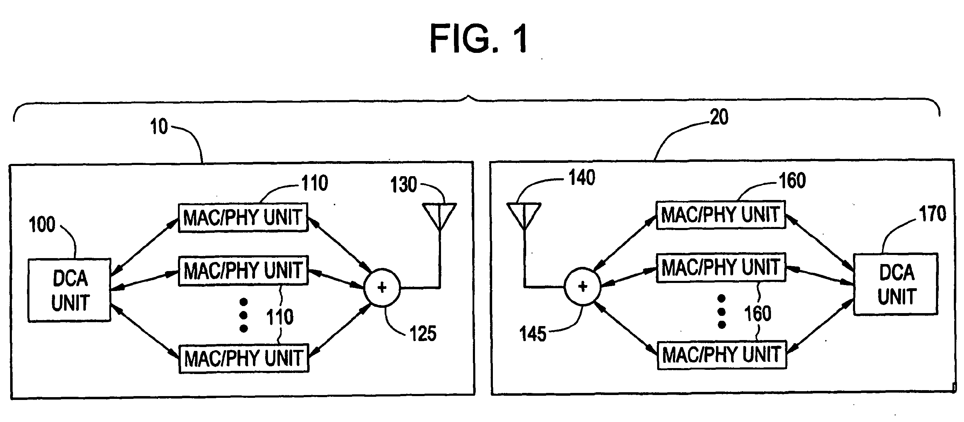

Fig. 1 illustrates two transceivers employing an embodiment of a dynamic channel assignment (DCA) method according to the present invention. As shown, a first dynamic channel assignment (DCA) unit 100 of first transceiver 10 may instruct a first plurality of Medium Access Controller (MAC)/Physical (PHY) units 110 to transmit request-to-send (RTS) messages. The implementation of the first MAC /PHY units 110 are well known in the art and will not be further described. Each first MAC/PHY unit 110 corresponds to a channel, which operates within a frequency range in which signals may be received and/or transmitted. For example, IEEE 802.11b has three non-overlapping channels, and here three first MAC/PHYs units 110 would exist. Each first MAC/PHY unit 110 sends a RTS message to a first combiner/demultiplexer 125. The combiner/demultiplexer 125 combines the signals from the MAC/PHY units 110 to produce a combined signal, and an antenna 130 transmits the combined signal.

An antenna 140 of a second transceiver 20 receives signals, such as signals transmitted by the antenna 130 of the first transceiver 10. Signals received by the antenna 140 are demultiplexed into their respective channels by a second combiner/demultiplexer 145 and sent to respective second MAC/PHY units 160. As with the first MAC/PHYS unit 110 in the first transceiver 10, the second MAC/PHYS units 160 in the second transceiver 20 corresponds to each channel (e.g., three MAC/PHYS unit 160 each corresponding to one of the three non-overlapping channels in IEEE 802. 11b). The implementation of the second MAC/PHY units 160 are well known in the art and will not be further described. At each MAC/PHY unit 160, messages are extracted from the channel. Extracted RTS messages are sent to a second DCA unit 170.

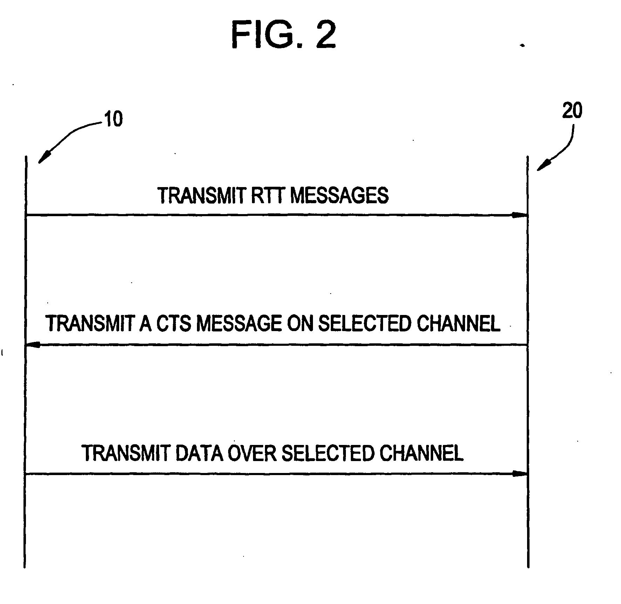

Fig. 2 illustrates a signal flow diagram of an exemplary interaction between two transceivers according to an embodiment of the dynamic channel assignment (DCA) of the present invention. As shown, when the first transceiver 10 has a packet to transmit the first DCA unit 100 causes the first transceiver 10 to send RTS messages over each of the plurality of channels (e.g., three non-overlapping channels in IEEE 802.11b). Based on the received RTS messages, the second DCA unit 170 in the second transceiver 20 selects one of the channels.

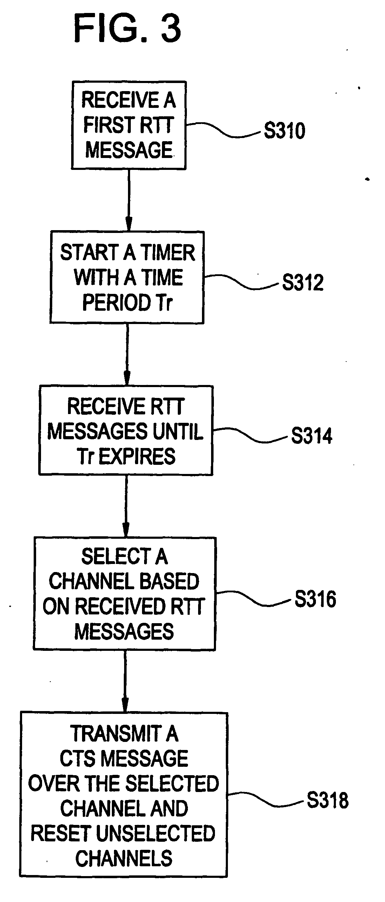

Fig. 3 illustrates a flow chart of a method of channel selection according to an exemplary embodiment of the present invention. As shown, the second DCA unit 170 receives a first one of the RTS messages in step S310. When the second DCA unit 170 receives the first RTS message, the second DCA unit 170 starts a timer (not shown) to count down a time period (Tr) in step S312. Additional RTS messages may be received by the second DCA unit 170 until the time period Tr expires in step S314. Based on the RTS messages received by the second DCA unit 170 within the time period Tr including the first received RTS message, a channel associated with one of the RTS messages is selected in step S316. The second DCA unit 170 may select the channel in step S316 according to any well-known channel selection algorithm, method or according to the channel selection method described in detail below.

Returning to Fig. 2, after the second DCA unit 170 selects a channel, the second DCA unit 170 instructs the MAC/PHY unit 160 associated with the selected channel to send a clear-to-send (CTS) message to the first transceiver 10 in step S318. The associated MAC/PHY unit 160 sends a CTS message to the second combiner/demultiplexer 145. The second combiner/demultiplexer 145 sends a signal including the CTS message on the selected channel to an antenna 140 for transmission. In this embodiment, only the selected channel contains a CTS message. After selecting the channel, the second DCA unit 170 also resets the unselected channels; namely, the second DCA unit 170 resets the second MAC/PHY units 160 associated with the unselected channels. This brings the reset second MAC/PHY units 160 to a state as if no RTS messages were received by those units.

The antenna 130 of the first transceiver 10 receives signals, such as signals transmitted by the antenna 140 of the second transceiver 20. Signals received by the antenna 130 are demultiplexed into their respective channels by the first combiner/demultiplexer 125 and sent to respective MAC/PHY units 110. Each MAC/PHY unit 110 extracts messages from their respective channel. The extracted CTS message is sent to the first DCA unit 100.

Receipt of a CTS message on the selected channel indicates to the first DCA unit 100 to use the selected channel for communication. The first transceiver 10 will then being sending traffic (e.g., packets) over the selected channel. The first DCA unit 100 also resets the unselected channels; namely, the first DCA unit 100 resets the first MAC/PHY units 110 associated with the unselected channels. This brings the reset MAC/PHY units 110 to a state as if no RTS messages were sent by those units.

It should be understood that within the exemplary embodiment of the present invention described above, the first transceiver 10 represents the source terminal and the second transceiver 20 represents the destination terminal. However, it should be understood that the second transceiver 20 may represent the source terminal and the first transceiver 10 may represent the destination terminal in another exemplary embodiment of the present invention.

In an exemplary embodiment of the present invention, the first transceiver 10 and the second transceiver 20 may encounter a situation in which no RTS message is properly received by the second DCA unit 170. A situation may also arise in which the channels for the received RTS messages are considered inappropriate for selection. One reason a received RTS message may be considered inappropriate is a low signal-to-noise ratio (SINR). When the second DCA unit 170 does not receive an RTS message and/or does not receive an appropriate RTS message, a CTS message is not sent to the first transceiver 10 by the second transceiver 20. After a time-out period in which the first DCA unit 100 does not receive a CTS message from the second transceiver 20, the first DCA unit 100 instructs the first MAC/PHY units 110 to retransmit the RTS messages over their respective communication channels to the second transceiver 20 in order to select a channel on which to transmit.

In an exemplary embodiment of the present invention, the timer period Tr may be determined based on a characteristic of the data transmission. For example, a small Tr value may indicate a small delay before data transmission is initiated over a selected channel. However, the channel selected may not be the best channel when using a small Tr value. A large Tr value may have a longer initial delay before data transmission begins as compared to a small Tr value, but a second DCA unit 170 using a large Tr value may select a better channel with superior performance characteristics as compared to a second DCA unit 170 using a small Tr value.

DCA gain refers to the performance increase between a transceiver using DCA over a transceiver using SCA. In general, the DCA gain may benefit from a large Tr value when a large amount of data is to be transmitted. The initial transmission delay is relatively insignificant when a large data transfer is required. Similarly, the DCA gain may benefit from a small Tr value when a small amount of data is required for transmission. The initial transmission delay is relatively significant when a small data transfer is required.

According to another exemplary embodiment of the present invention, a packet transmission over the selected channel may be unsuccessful. The packet is then re-transmitted on the selected channel. If normal operation is resumed following the re-transmission of the data packet, the data transmission continues normally on the selected channel. However, if there is a second unsuccessful packet transmission attempt, the selected channel is reset and the first DCA unit 100 instructs the MAC/PHY units 110 to re-transmit the RTS messages on the multiple communication channels to the transceiver 20 in order to select a new channel for transmission.

In another embodiment of the present invention, the first DCA unit 100 instructs the MAC/PHY units 110 to re-transmit the RTS messages on the multiple communication channels in order to select a new channel after a number of data packets have been sent by the first transceiver 10.

According to another exemplary embodiment of the present invention, a registration and authentication process is executed on a set one of the multiple communication channels prior to using the DCA according to the present invention.

According to another exemplary embodiment of the present invention, the first DCA unit 170 initiates DCA only if the length exceeds a fixed threshold amount (L). The threshold amount L may be user-specified or a design parameter set by the system designer. If the length of the packet to be transmitted exceeds the threshold amount L, DCA may be initiated, such as illustrated in Figures 1-3. By initiating DCA only for packets longer than L, a hidden terminal problem may be avoided.

Hidden terminal interference is caused by the simultaneous transmission of two transceivers where each transceiver is unaware of the transmission of the other transceiver, and the transmission of both transceivers are received by the same destination transceiver. This interference lowers the system throughput and increases the average packet delay.

According to an exemplary embodiment of the present invention, a hidden terminal problem may be avoided using DCA by selecting a channel which does not currently carry traffic, if such a channel is available. Thus, the number of transceivers simultaneously transmitting to a destination transceiver may be reduced.

In an exemplary embodiment of the present invention, DCA is not activated when the length of the packet for transmission does not exceed the threshold amount L. In this embodiment, the packet is transmitted according to conventional SCA techniques.

Further, a system designer may specify a small threshold amount L value to realize DCA gain. However, a threshold amount L value that is too small may cause unnecessary delay before data transmission for small data packets, and may waste bandwidth due to the DCA operations.

According to another exemplary embodiment of the present invention, a transmitting DCA transceiver may communicate with a receiving transceiver that does not have DCA capability. The DCA transceiver may operate normally as if the transceiver had DCA capability. A CTS message would be received by the DCA transceiver only on one of the multiple communication channels because the non-DCA transceiver will only respond on the one fixed channel.

A determination that the non-DCA transceiver does not have DCA capability may be made by the DCA transceiver after receiving a CTS message only on the one, same channel for a period of time. The DCA transceiver may then turn off the MAC/PHY's for other channels.

According to another exemplary embodiment of the present invention, a receiving DCA transceiver may be implemented with a transmitting transceiver that does not have DCA capability. The DCA transceiver may operate normally as if the transceiver had DCA capability. A RTS message would be received by the receiving DCA transceiver only on one of the multiple communication channels. A determination that the non-DCA transceiver does not have DCA capability may be made by the DCA transceiver after receiving an RTS message only on the one, same channel for a period of time. The DCA transceiver may then turn off the MAC/PHY's for other channels.

Next, a method of selecting a channel as set forth in step S316 of Fig. 3 according to one embodiment of the present invention will be described. From the RTS messages received in steps S310 and S314, the second DCA unit 170 may estimate the signal-to-noise ratio (SINR) for each channel associated with a received RTS message in any well-known manner. The channel having the maximum estimated SINR is the channel selected in step S316.

The inventive techniques of the present invention will allow transceivers using DCA to avoid interference inherent in transceivers using SCA, and therefore reduce the negative effects interference may inflict on a 802.11 wireless communication system.

The exemplary embodiments of the present invention being thus described, it will be obvious that the same may be varied in many ways. For example, the exemplary embodiments may apply to 802.11 wireless networks in which each of the multiple communication channels do not overlap with one another. It should be further understood that the exemplary embodiments may apply to 802.11 wireless networks in which at least one of the multiple communication channels overlap with another of the multiple communication channels. Such variations are not to be regarded as a departure from the scope of the exemplary embodiments of the invention, and all such modifications as would be obvious to one skilled in the art are intended to be included within the scope of the following claims.

## Claims

1. A method of supporting dynamic channel assignment in a wireless network, comprising:
transmitting a request-to-send message on multiple communication channels by a source terminal in order to request permission to transmit on less than all of the multiple communication channels;
receiving a clear-to-send message over one of the multiple communication channels at the source terminal (10); and
transmitting data by the source terminal (10) over the one of the multiple communication channels on which the clear-to-send message is received.

2. The method of claim 1, comprising:
resetting the multiple communication channels other than the one of the multiple communication channels on which the clear-to-send message is received at the source terminal (10).

3. The method of claim 1, wherein the transmitting step transmits a request-to-send message on one of the multiple communication channels when data for transmission exceeds a threshold amount.

4. A method of supporting dynamic channel assignment for data transmission in a wireless network, comprising:
transmitting(S318), by a destination terminal (20), a clear-to-send message over a communication channel selected from multiple communication channels based on a request-to-send message (S310, S314) received over each of a number of the multiple communication channels.

5. The method of claim 1 or 4, wherein the multiple communication channels are non-overlapping.

6. The method of claim1 or 4, wherein the multiple communication channels are overlapping.

7. The method of claim 4, further comprising:
receiving (S310, S314) a request-to-send message over at least one of the multiple communication channels; and
selecting (S316) one of the multiple communication channels based on at least one signal characteristic of each received request-to-send message.

8. The method of claim 7, further comprising:
starting a timer (S312) that measures a time period starting after receipt of a first request-to-send message at the destination terminal; and wherein
the selecting step (S316) selects the one of the multiple communication channels over which a request-to-send message was received within the time period based on at least one signal characteristic of each received request-to-send message.

9. The method of claim 7 or 8, further comprising:
resetting, at the destination terminal (20), each of the multiple communication channels other than the selected communication channel.

## Patentansprüche

1. Verfahren zur Unterstützung der dynamischen Kanalzuweisung in einem drahtlosen Netzwerk, mit den folgenden Schritten:
Senden einer Sendeanforderungsnachricht auf mehreren Kommunikationskanälen durch ein Quellenendgerät, um Erlaubnis zum Senden auf weniger als allen der mehreren Kommunikationskanäle anzufordern;
Empfangen einer Sendeerlaubnisnachricht über einen der mehreren Kommunikationskanäle in dem Quellenendgerät (10); und
Senden von Daten durch das Quellenendgerät (10) über den einen der mehreren Kommunikationskanäle, auf dem die Sendeerlaubnisnachricht empfangen wird.

2. Verfahren nach Anspruch 1, umfassend:
Rücksetzen der von dem einen der mehreren Kommunikationskanäle, auf dem die Sendeerlaubnisnachricht in dem Quellenendgerät (10) empfangen wird, verschiedenen mehreren Kommunikationskanäle.

3. Verfahren nach Anspruch 1, wobei der Sendeschritt eine Sendeanforderungsnachricht auf einem der mehreren Kommunikationskanäle sendet, wenn zu übertragende Daten eine Schwellenmenge übersteigen.

4. Verfahren zur Unterstützung der dynamischen Kanalzuweisung zur Datenübertragung in einem drahtlosen Netzwerk, mit den folgenden Schritten:
Senden (S318), durch ein Zielendgerät (20), einer Sendeerlaubnisnachricht über einen Kommunikationskanal, der aus mehreren Kommunikationskanälen ausgewählt wird, auf der Basis einer Sendeanforderungsnachricht (S310, S314), die über jeden einer Anzahl der mehreren Kommunikationskanäle empfangen wird.

5. Verfahren nach Anspruch 1 oder 4, wobei sich die mehreren Kommunikationskanäle nicht überlappen.

6. Verfahren nach Anspruch 1 oder 4, wobei sich die mehreren Kommunikationskanäle überlappen.

7. Verfahren nach Anspruch 4, ferner mit den folgenden Schritten:
Empfangen (S310, S314) einer Sendeanforderungsnachricht über mindestens einen der mehreren Kommunikationskanäle; und
Auswählen (S316) eines der mehreren Kommunikationskanäle auf der Basis mindestens einer Signalkenngröße jeder empfangenen Sendeanforderungsnachricht.

8. Verfahren nach Anspruch 7, ferner mit den folgenden Schritten:
Starten eines Timers (S312), der einen nach dem Empfang einer ersten Sendeanforderungsnachricht in dem Zielendgerät beginnenden Zeitraum mißt; und wobei
der Auswahlschritt (S316) einen der mehreren Kommunikationskanäle, worauf eine Sendeanforderungsnachricht innerhalb des Zeitraums empfangen wurde, auf der Basis mindestens einer Signalkenngröße jeder empfangenen Sendeanforderungsnachricht auswählt.

9. Verfahren nach Anspruch 7 oder 8, ferner mit dem folgenden Schritt:
Rücksetzen, in dem Zielendgerät (20), jeder der von dem gewählten Kommunikationskanal verschiedenen mehreren Kommunikationskanäle.

## Revendications

1. Procédé de support de l'attribution dynamique de canaux dans un réseau sans fil, comprenant:
la transmission d'un message de demande pour émettre sur de multiples canaux de communication par un terminal source afin de demander la permission de transmettre sur moins que la totalité des multiples canaux de communication ;
la réception d'un message prêt à émettre sur l'un des multiples canaux de communication au niveau du terminal source (10) ; et
la transmission de données par le terminal source (10) sur l'un des multiples canaux de communication sur lequel le message prêt à émettre est reçu.

2. Procédé selon la revendication 1, comprenant :
la remise à zéro des multiples canaux de communication autres que celui des multiples canaux de communication sur lequel le message prêt à émettre est reçu au niveau du terminal source (10).

3. Procédé selon la revendication 1, dans lequel l'étape de transmission transmet un message demande à émettre sur l'un des multiples canaux de communication quand des données de transmission dépassent une quantité de seuil.

4. Procédé de support de l'attribution dynamique de canaux dans un réseau sans fil, comprenant:
la transmission (S318), par un terminal destinataire (20), d'un message prêt à émettre sur un canal de communication sélectionné parmi de multiples canaux de communication d'après un message de demande pour émettre (S310, S314) reçu sur chacun d'un nombre des multiples canaux de communication.

5. Procédé selon la revendication 1 ou 4, dans lequel les multiples canaux de communication ne se chevauchent pas.

6. Procédé selon la revendication 1 ou 4, dans lequel les multiples canaux de communication se chevauchent.

7. Procédé selon la revendication 4, comprenant en outre :
la réception (S310, S314) d'un message de demande pour émettre sur au moins l'un des multiples canaux de communication ; et
la sélection (S316) de l'un des multiples canaux de communication d'après au moins une caractéristique de signal de chaque message de demande pour émettre reçu.

8. Procédé selon la revendication 7, comprenant en outre :
le lancement d'une temporisation (S312) qui mesure une période de temps démarrant après la réception d'un premier message de demande à émettre au niveau du terminal destinataire ; et dans lequel
l'étape de sélection (S316) sélectionne l'un des multiples canaux de communication sur lequel un message de demande pour émettre a été reçu dans la période de temps d'après au moins une caractéristique de signal de chaque message de demande pour émettre reçu.

9. Procédé selon la revendication 7 ou 8, comprenant en outre :
la remise à zéro, au niveau du terminal destinataire (20), de chacun des multiples canaux de communication autres que le canal de communication sélectionné.
